# FASCICULE DE BREVET EUROPEEN

(11) **EP 1 864 365 B1**
(45) Date de publication et mention de la délivrance du brevet: **28.12.2016**
(21) Numéro de dépôt: 06726164.4
(22) Date de dépôt: 31.03.2006
(51) Int. Cl.: H02K 1/24

(54) **ROTOR DE MACHINE ELECTRIQUE TOURNANTE COMPORTANT UN MANCHON INTERMEDIAIRE INTERPOSE ENTRE L'ARBRE ET LES ROUES POLAIRES ET PROCEDE DE REALISATION DU ROTOR**
ELEKTRISCHE DREHMASCHINE MIT EINEM ZWISCHEN DEM SCHAFT UND DEN POLARRÄDERN ANGEORDNETEN ZWISCHENMANTEL UND VERFAHREN ZUR HERSTELLUNG DES ROTORS
ELECTRICAL ROTATING MACHINE COMPRISING AN INTERMEDIATE SLEEVE INTERPOSED BETWEEN THE SHAFT AND THE POLAR WHEELS AND METHOD FOR MAKING THE ROTOR

(30) Priorité: 31.03.2005 FR 0503109
(43) Date de publication de la demande: 12.12.2007
(73) Titulaire: VALEO EQUIPEMENTS ELECTRIQUES MOTEUR, 94017 Créteil Cedex (FR)
(72) Inventeur: BADEY, Jean-Philippe, F-62630 Etaples sur Mer (FR); LENOIR, Romaric, F-62176 Sainte Cécile (FR); TUNZINI, Marc, F-78000 Versailles (FR); BILTERYST, Pierre-Yves, F-62170 Brimeux (FR)
(74) Mandataire: Gamonal, Didier
(86) Numéro de dépôt international: PCT/FR2006/000715
(87) Numéro de publication internationale: WO 2006/103361

(56) Documents cités:
- EP-A- 0 454 039
- US-A- 3 694 906
- US-A- 4 886 392
- US-A- 5 158 390
- US-A- 6 069 432
- US-A1- 2002 175 589
- PATENT ABSTRACTS OF JAPAN vol. 1997, no. 06, 30 juin 1997 (1997-06-30) -& JP 09 037519 A (HITACHI LTD), 7 février 1997 (1997-02-07)
- PATENT ABSTRACTS OF JAPAN vol. 2003, no. 12, 5 décembre 2003 (2003-12-05) & JP 2004 350473 A (MITSUBISHI ELECTRIC CORP), 9 décembre 2004 (2004-12-09)
- PATENT ABSTRACTS OF JAPAN vol. 2003, no. 12, 5 décembre 2003 (2003-12-05) -& JP 2003 333780 A (ASMO CO LTD), 21 novembre 2003 (2003-11-21)
- PATENT ABSTRACTS OF JAPAN vol. 2000, no. 11, 3 janvier 2001 (2001-01-03) -& JP 2000 232744 A (DENSEI LAMBDA KK), 22 août 2000 (2000-08-22)
- PATENT ABSTRACTS OF JAPAN vol. 2003, no. 12, 5 décembre 2003 (2003-12-05) & JP 2003 324873 A (HITACHI LTD; HITACHI CAR ENG CO LTD), 14 novembre 2003 (2003-11-14)

## Description

L'invention concerne un rotor de machine électrique tournante, telle qu'un alternateur ou un alterno-démarreur, notamment pour véhicule automobile.

L'invention concerne plus particulièrement un rotor de machine électrique tournante, telle qu'un alternateur ou un alterno-démarreur, notamment pour véhicule automobile, qui comporte :
- un arbre central ;
- un noyau annulaire coaxial à l'arbre ;
- un bobinage qui s'étend radialement autour du noyau ;
- et deux roues polaires à griffes qui sont agencées axialement de part et d'autre du noyau et du bobinage ;
du type dans lequel l'arbre comporte au moins un tronçon d'entraînement dont la section, suivant un plan radial, est non lisse, et qui est emmanché axialement à force dans un alésage de fixation d'au moins un composant du rotor de manière à solidariser en rotation au moins les deux roues polaires du rotor à l'arbre.

### Etat de la technique

On connaît déjà, par le document EP0454039 A, des rotors de ce type dans lequel le noyau est divisé axialement en deux tronçons distincts et chaque tronçon est réalisé venu de matière avec une des roues polaires.

Lors du montage du rotor, les deux roues sont tout d'abord pressées l'une contre l'autre de part et d'autre du bobinage de manière que les faces radiales internes en vis-à-vis des deux tronçons du noyau soient pressées l'une contre l'autre, afin d'assurer un bon appui des deux faces pour permettre un passage optimal de flux magnétique à travers le noyau.

Le positionnement angulaire d'une roue par rapport à l'autre est réalisé au moyen de doigts d'indexage interposés entre les deux roues polaires de manière temporaire pendant le pressage.

Par ailleurs, les deux tronçons de noyau ont une forme conique de manière que, sous l'effort de pressage, le bobinage soit déformé radialement et ainsi serré autour du noyau de manière à être maintenu solidaire en rotation avec le noyau.

Ensuite, l'arbre est emmanché à force dans les alésages des roues polaires. Un tronçon d'entraînement de l'arbre, qui est reçu dans les alésages, comporte des reliefs, par exemple un moletage sous la forme de cannelures ou de stries, pour solidariser en rotation l'arbre et les roues polaires.

Selon un autre mode de réalisation du rotor décrite dans le document JP09037519, le noyau est formé d'une pièce unique qui est distincte des deux roues polaires. Le bobinage est enroulé autour du noyau. Les roues sont ensuite positionnées axialement de part et d'autre du noyau. Puis un effort axial de pressage est appliqué aux roues de manière que leurs faces radiales internes soient pressées contre le noyau afin d'assurer un passage optimal d'un flux magnétique entre le noyau et chaque roue polaire.

Pendant que les roues polaires sont sous contrainte, le tronçon d'entraînement de l'arbre est emmanché en force dans les roues et dans le tube central.

Cependant, dans ces deux modes de réalisation connus, le tronçon d'entraînement de l'arbre, et notamment les stries, ne permettent pas d'obtenir une concentricité suffisamment précise des roues polaires et/ou du noyau par rapport à l'axe de rotation de l'arbre. L'alésage central de chaque roue polaire est en effet déformé plastiquement selon une direction radiale de manière non homogène. En effet on constate que les stries ne pénètrent pas de manière uniforme dans les alésages centraux des roues polaires et du noyau.

Pour corriger ce défaut de centrage, il est nécessaire de réaliser une opération d'usinage de la face périphérique extérieure des roues polaires après leur montage pour garantir la concentricité entre la périphérie extérieure du rotor et l'axe de rotation de l'arbre.

Lors de cette opération d'usinage, des copeaux chauds sont susceptibles d'être projetés sur le bobinage qui risque ainsi d'être détérioré.

De plus, cette opération d'usinage ne peut pas être réalisée à l'aide d'un lubrifiant qui risque aussi de détériorer le bobinage. L'opération d'usinage est donc rendue plus longue et plus onéreuse.

En outre, la force nécessaire pour presser axialement les roues l'une contre l'autre ne permet pas d'obtenir un positionnement axial précis des roues l'une par rapport à l'autre.

Par ailleurs, les stries du tronçon d'entraînement de l'arbre ne sont jamais orientées de façon parfaitement rectiligne selon une direction axiale, mais elles sont généralement légèrement de forme hélicoïdale autour de l'arbre, ce qui constitue un défaut. Ainsi, lors de l'emmanchement du tronçon d'entraînement de l'arbre dans les roues polaires pressées l'une contre l'autre, la forme hélicoïdale des stries provoque l'apparition d'une contrainte de torsion entre l'alésage de chaque roue et l'arbre, ce qui est susceptible de provoquer un mouvement relatif de rotation des deux roues polaires l'une par rapport à l'autre lorsque la contrainte axiale est relâchée.

Ce mouvement relatif provoque un désalignement circonférentiel entre les roues polaires et notamment les dents de celles-ci.

Enfin, le fait de presser les roues l'une contre l'autre préalablement à l'emmanchement de l'arbre a pour effet de faire fluer leur matière vers l'alésage intérieur. Ceci a pour conséquence de diminuer le diamètre intérieur de l'alésage des roues polaires. L'effort d'emmanchement nécessaire pour emmancher l'arbre dans les roues polaires est donc augmenté en conséquence et l'arbre est susceptible de flamber, sachant que l'extrémité arrière de cet arbre est de diamètre réduit pour notamment le montage de bagues collectrices.

### Objet de l'invention

Afin de résoudre ces problèmes, l'invention propose un rotor du type décrit précédemment, caractérisé par la partie caractérisante de sa revendication 1.

Grâce à l'invention l'opération d'usinage de la face périphérique extérieure des roues polaires, c'est-à-dire l'opération d'usinage de la périphérie externe du rotor à griffes, est réalisée par avance sans présence du bobinage d'excitation du rotor en sorte que ce bobinage d'excitation ne risque pas d'être détérioré par la projection de copeaux. Cette opération d'usinage peut être réalisée à l'aide d'un lubrifiant en sorte que la durée de vie de l'outil d'usinage est augmentée.

L'entrefer entre la périphérie interne du corps du stator, que présente la machine électrique tournante, et la périphérie externe du rotor de cette machine est donc réalisé sans usinage ultérieur du rotor.

Dans un mode de réalisation on peut usiner par avance des rainures hélicoïdales à la périphérie externe du rotor pour couper les courants de Foucault développés à la face périphérique extérieur des roues polaires comme décrit dans le document FR 2 774 524.

En outre on peut aisément usiner la périphérie externe du ou des manchons intermédiaires pour avoir une bonne concentricité du ou des manchons par rapport à l'axe de l'arbre, les roues polaires étant usinées avant leur montage sur le ou les manchons, qui constituent des manchons de centrage.

De plus on peut standardiser le diamètre externe du ou des manchons intermédiaires pour monter des roues polaires de tailles différentes.

Dans un mode de réalisation le manchon intermédiaire de centrage est distinct de l'arbre central

Ainsi grâce à l'invention on peut utiliser le même arbre central que dans l'art antérieur et l'effort pour emmancher l'arbre central dans le ou les manchons intermédiaires est réduit, en sorte que l'on ménage l'extrémité arrière de l'arbre.

Selon d'autres caractéristiques du rotor, prises isolément ou en combinaison :
- le manchon intermédiaire comporte une portée cylindrique coaxiale à l'arbre central qui est associée à chaque roue polaire, et qui est reçue dans un alésage cylindrique complémentaire central de la roue polaire associée, de manière à positionner la roue polaire associée coaxialement à l'arbre ;
- le manchon intermédiaire est interposé entre le noyau et l'arbre ;
- le noyau est au moins en partie formé venu de matière avec l'une des roues polaires ;
- le noyau est réalisé en au moins deux tronçons distincts axialement et en ce que chaque tronçon du noyau est formé venu de matière avec la roue polaire adjacente ;
- le noyau et les roues polaires sont des éléments distincts ;
- le rotor comporte un manchon unique ;
- le rotor comporte une pluralité de manchons ;
- le rotor comporte au moins deux manchons dont chacun est associé à une roue polaire et qui sont agencés axialement de part et d'autre du noyau ;
- le rotor comporte des moyens de positionnement axial des roues polaires l'une par rapport à l'autre le long de l'arbre ;
- chaque roue polaire comporte une face radiale interne qui est en butée axialement contre une face radiale externe en vis-à-vis du noyau ;
- chaque tronçon de noyau comporte une face radiale interne qui sont axialement en butée l'une contre l'autre ;
- la roue polaire et le manchon intermédiaire sont solidarisés par soudage ;
- la roue polaire et le manchon sont solidarisés par sertissage ;
- la roue polaire ou le manchon comporte un chanfrein en arc de cercle pour le sertissage de l'autre pièce.

L'invention propose aussi un procédé de réalisation d'un tel rotor, du type qui comporte :
- une étape de montage du noyau ;
- une étape de montage du bobinage ;
- une étape de montage de chaque roue polaire ;
- une étape de réglage de la concentricité de chaque roue polaire par rapport à l'arbre ;
- une étape de réglage du positionnement axial des roues polaires l'une par rapport à l'autre.

Ce procédé est caractérisé par la partie caractérisante de la revendication 15.

Dans un mode de réalisation le manchon intermédiaire est distinct des roues polaires et l'étape de montage consiste à emmancher axialement à force le tronçon d'entraînement dans l'alésage du manchon intermédiaire.

Selon d'autres caractéristiques du procédé :
- l'étape de montage de chaque roue polaire consiste à emmancher la portée cylindrique associée du manchon dans l'alésage de chaque roue ;
- l'étape de réglage de la concentricité de chaque roue polaire comporte une deuxième opération d'usinage de l'alésage de chaque roue polaire ;
- l'étape de réglage de la concentricité comporte une troisième opération d'usinage de la face cylindrique périphérique extérieure de la roue polaire ;
- l'étape de réglage du positionnement axial de chaque roue polaire comporte une première opération d'usinage de la face radiale interne de la roue ;
- l'étape du montage du noyau est réalisée simultanément à l'étape de montage des roues ;
- le procédé comporte une étape finale de solidarisation de chaque roue avec le manchon associé, en rotation et en translation avec l'arbre.

### Description sommaire des dessins

D'autres caractéristiques et avantages apparaîtront au cours de la lecture de la description détaillée qui va suivre pour la compréhension de laquelle on se reportera aux dessins annexés, parmi lesquels :
- la figure 1 est une vue en coupe axiale qui représente un alternateur muni d'un rotor de l'état de la technique ;
- la figure 2 est une vue en coupe axiale qui représente un rotor réalisé selon les enseignements de l'invention ;
- la figure 3 est la même vue que celle de la figure 2 dans laquelle les roues polaires du rotor sont solidarisées avec le manchon intermédiaire par sertissage ;
- la figure 4 est une vue en bout de coté du rotor de la figure 2 ;
- la figure 5 est une vue en coupe axiale qui représente un deuxième mode de réalisation de l'invention ;

### Description d'exemples de réalisation de l'invention

Dans la suite de la description, des éléments analogues, similaires ou identiques seront désignés par un même numéro de référence.

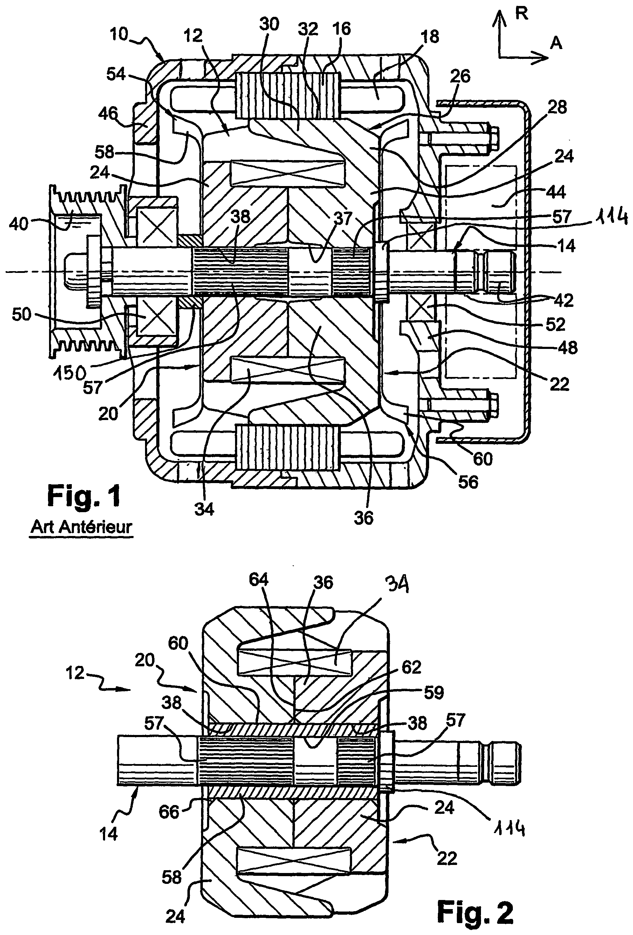

Dans la suite de la description on adoptera une orientation axiale et radiale indiquée par les flèches "A" et "R" de la figure 1.

Par ailleurs, des faces radiales orientées vers le milieu du noyau seront qualifiées de faces internes tandis que les faces orientées dans un sens opposé seront qualifiées de faces externes.

Les faces radiales interne et externe sont donc des faces d'extrémité axiales du noyau.

De même, des faces axiales orientées vers l'axe de rotation de l'arbre seront qualifiées de faces intérieures tandis que des faces axiales orientées dans un sens opposé seront qualifiées de faces extérieures.

En se reportant à la figure 1, on a représenté une machine électrique tournante de l'état de la technique, dans le cas présent un alternateur à ventilation interne du type polyphasé pour véhicule automobile à moteur thermique fonctionnant en mode alternateur. Bien entendu l'alternateur peut aussi être réversible et consister en un alterno-démarreur fonctionnant également en mode moteur électrique notamment pour démarrer le moteur thermique du véhicule comme décrit dans le document FR A 2 745 445.

Lorsque la machine fonctionne en mode alternateur elle transforme de l'énergie mécanique en énergie électrique comme tout alternateur. Lorsque la machine fonctionne en mode moteur électrique, notamment en mode démarreur pour démarrer le moteur thermique du véhicule, elle transforme de l'énergie électrique en énergie mécanique.

Cette machine comporte essentiellement un carter 10 et, à l'intérieur de celui-ci, un rotor 12 solidaire en rotation d'un arbre central 14, appelé arbre de rotor, et un stator 16 qui entoure le rotor 12 et qui comporte un corps en forme d'un paquet de tôles doté d'encoches, par exemple du type semi-fermé, pour le montage d'un bobinage de stator 18 formant de part et d'autre du stator 16 à chaque extrémité axiale de celui-ci un chignon.

Ce bobinage de stator 18 comporte par exemple un jeu d'enroulements triphasé en étoile ou en triangle, dont les sorties sont reliées à un pont redresseur (non représenté) comportant des éléments redresseurs tels que des diodes ou des transistors du type MOSFET, notamment lorsque la machine est du type réversible et consiste en un alterno-démarreur comme décrit par exemple dans le document FR-A-2.745.445 (US-A-6.002.219).

Les enroulements sont obtenus à l'aide d'un fil continu, électriquement conducteur, revêtu d'une couche isolante et monté dans les encoches concernées du corps du stator 16.

Selon une variante non représentée, pour un meilleur remplissage des encoches du corps du stator 16, les enroulements sont réalisés à l'aide de conducteurs en forme de barres, tel que des épingles, reliées entre elles par exemple par soudage.

Selon une autre variante non représentée, pour réduire le taux d'ondulation et les bruits magnétiques, le bobinage de stator 18 comporte deux jeux d'enroulements triphasés pour former un dispositif d'enroulements composites de stator, les enroulements étant décalés de trente degrés électriques comme décrit par exemple dans les documents US-A1-2002/0175589, EP-0.454.039 et FR-A-2.784.248. Dans ce cas il est prévu deux ponts redresseurs et toutes les combinaisons d'enroulements triphasés en étoile et/ou en triangle sont possibles.

En variante le bobinage du stator est du type pentaphasé.

D'une manière générale l'alternateur est du type polyphasé et le ou les ponts redresseurs permettent notamment de redresser le courant alternatif produit dans les enroulements du stator 16 en un courant continu notamment pour charger la batterie (non représentée) du véhicule automobile et alimenter les charges et les consommateurs électriques du réseau de bord du véhicule automobile.

Le rotor 12 est réalisé dans l'exemple représenté sous forme d'un rotor à griffes, comme décrit par exemple dans les documents US-A1-2002/0175589 et EP-A1-0.454.039, comprenant deux roues polaires 20, 22, ici axialement juxtaposées et présentant chacune un flasque transversal 24 de forme annulaire pourvu à sa périphérie extérieure de griffes 26.

Chaque griffe 26 comporte un tronçon d'enracinement 28 d'orientation transversale dans le plan du flasque 24 concerné. Ce tronçon d'enracinement 28 est prolongé à sa périphérie extérieure par une dent 30 d'orientation globalement axiale.

Un entrefer annulaire existe entre la face périphérique extérieure 32 des dents 30 et la périphérie intérieure du corps du stator 16.

Les dents 30 sont globalement de forme trapézoïdale ou triangulaire et sont dirigées axialement vers le flasque 24 de l'autre roue polaire 20, 22, la dent 30 d'une roue polaire 20, 22 pénétrant dans l'espace existant entre deux dents 30 adjacentes de l'autre roue polaire 20, 22, de sorte que les dents 30 des roues polaires 20, 22 soient imbriquées.

Un bobinage d'excitation 34 est implanté axialement entre les flasques 24 des roues polaires 20, 22. Il est porté par une partie de rotor 12 en forme d'un noyau annulaire cylindrique 36 coaxial à l'arbre 14, qui comporte un alésage central 37. Le noyau 36 est ici constitué de deux tronçons axialement distincts dont chacun est réalisé venu de matière avec une roue polaire 20, 22 associée comme représenté à la figure 1.

Selon une variante non représentée, le noyau central 36 est constitué d'une seule pièce et il est distinct des roues polaires 20, 22 qui sont agencées axialement de part et d'autre du noyau 36.

Dans la suite de la description, le terme "bobinage" sans qualificatif sera compris comme le bobinage d'excitation 34 et non pas comme le bobinage de stator 18.

Le bobinage 34 est donc implanté dans l'espace délimité radialement par les griffes 26 des roues polaires 20, 22 et le noyau central 36.

Les roues polaires 20, 22 et le noyau 36 sont de préférence en matière ferromagnétique et sont traversés de manière coaxiale par l'arbre de rotor 14 également en matériau ferromagnétique. A cet effet, chaque roue polaire 20, 22 comporte un alésage central 38 qui traverse axialement le flasque 24 et prolonge l'alésage 37 de la partie du noyau 36 concerné.

Le fil du bobinage d'excitation 34 est à la figure 1 bobiné sur un support en matière électriquement isolante (non représenté) monté, de préférence à force, sur la périphérie extérieure du noyau 36.

Ce support est ici de section globalement en forme de U pour isoler le bobinage 34 des flasques 24 des roues 20, 22.

Selon une variante non représentée, lorsque le noyau 36 est en une partie, le fil du bobinage 34 est bobiné sur un isolant fixé sur le noyau 36 et est conformé pour éviter tout contact avec les flasques 24 et les dents 30 des roues polaires 20, 22.

Lorsque le bobinage d'excitation 34 est activé, c'est-à-dire alimenté électriquement, les roues polaires 20, 22 et le noyau 36, qui sont réalisés en matériau ferromagnétique, sont magnétisés et le rotor 12 devient un rotor inducteur avec formation de pôles magnétiques au niveau des griffes 26 à dents 30 des roues polaires 20, 22.

Ce rotor inducteur 12 crée un courant induit alternatif dans le stator 16 induit lorsque l'arbre 14 tourne.

L'arbre 14 du rotor 12 porte à son extrémité avant une poulie 40 appartenant à un dispositif de transmission de mouvements par l'intermédiaire d'au moins une courroie (non représentée) entre l'alternateur et le moteur thermique du véhicule automobile, et il porte à son extrémité arrière 42 des bagues collectrices reliées par des liaisons filaires (non représentées) aux extrémités du bobinage d'excitation 34 du rotor 12.

Des balais appartiennent à un porte-balais représenté de façon générale à la référence 44 et ils sont disposés de façon à frotter sur les bagues collectrices 42, afin d'alimenter le bobinage 34 en courant électrique. Le porte-balais 44 est relié à un régulateur de tension (non représenté).

Le carter 10 est ici en deux parties, à savoir un palier avant 46 adjacent à la poulie 40 et un palier arrière 48 portant le porte-balais 44 et le plus souvent le ou les ponts redresseurs et le régulateur de tension. Les paliers 46, 48 sont de forme creuse et portent chacun centralement un roulement à billes respectivement 50 et 52 pour le montage à rotation de l'arbre 14 du rotor 12.

L'alternateur comporte aussi des moyens pour son refroidissement.

Par exemple, comme illustré à la figure 1, les paliers 46, 48 sont ajourés pour permettre le refroidissement de l'alternateur par circulation d'air. A cette fin, le rotor 12 porte au moins à l'une de ses extrémités axiales un ventilateur destiné à assurer cette circulation de l'air. Dans l'exemple représenté, un premier ventilateur 54 est prévu sur la face frontale avant du rotor 12 et un deuxième ventilateur 56, plus puissant, à la face arrière du rotor 12. Chaque ventilateur 54, 56 est pourvu d'une pluralité de pâles 58, 60 qui sont fixées sur les faces radiales externes des flasques 24.

Selon une variante non représentée, l'alternateur peut aussi être refroidi par un fluide caloporteur, le carter 10 étant alors configuré pour comporter un canal de circulation approprié du fluide caloporteur.

Il est à noter que dans l'exemple de réalisation décrit le rotor 12 comporte huit dents 30 par roue polaire et donc huit paires de pôles. Il est donc prévu quarante-huit encoches dans le corps du stator dans le cas dans lequel il est prévu un jeu d'enroulements triphasés ou deux jeux d'enroulements triphasés comme décrit dans le document FR-A-2.737.063 précité, ou quatre-vingt-seize encoches dans les solutions décrites dans les documents US-A1-2002/0175589 et EP-A1-0.454.039 précités. Bien entendu le rotor 12 peut, selon les applications, comporter un nombre différent de paires de pôles. Par exemple chaque roue polaire peut comporter en variante six dents en sorte que le rotor comporte six paires de pôle et le stator 36 ou 72 encoches.

Selon une variante non représentée, les performances de la machine, à savoir sa puissance et son rendement, peuvent encore être augmentées en utilisant un rotor 12 qui comporte, de façon connue et par exemple décrite dans le brevet français FR-2.784.248, un certain nombre d'aimants permanents interposés entre deux dents 30 adjacentes à la périphérie du stator 16, en choisissant le nombre de ces aimants de façon qu'il soit égal ou inférieur au nombre de pôles du rotor et que leur disposition soit symétrique par rapport à l'axe du rotor. Il est par exemple prévu quatre, six ou huit paires d'aimants pour huit paires de pôles.

De façon connue, l'arbre 14 comporte des tronçons de section radiale non lisse 57 d'entraînement, qui sont ici des tronçons moletés ici à stries axiales, comme visible à la figure 1, pour fixation et entraînement des roues polaires 20, 22 et du noyau 36. Les roues polaires 20, 22 et le noyau 36 sont ainsi montés par emmanchement à force sur l'arbre 14 plus dur, en sorte que celui-ci, par l'intermédiaire de ses stries, taille des sillons dans l'alésage central des roues polaires 20, 22 et dans le noyau 36 lors de leur emmanchement à force pour solidarisation en rotation de l'arbre avec le noyau 36 et les roues 20, 22.

Comme décrit précédemment, une telle conception du rotor 12 pose des problèmes lors de la réalisation du rotor 12.

L'invention propose donc un rotor 12, comme représenté aux figures 2 à 5, qui comporte au moins un manchon intermédiaire 58 qui est interposé radialement entre chaque roue polaire 20, 22 et l'arbre central 14, et sur lequel est monté la dite roue polaire.

Dans les figures 2 à 5 le tronçon d'entraînement 57 est emmanché à force dans un alésage de fixation 59 réalisé dans le manchon intermédiaire 58 distinct de l'arbre 14.

Dans les figures 2 à 5 le manchon intermédiaire 58 est interposé radialement entre le tronçon d'entraînement 57 non lisse de l'arbre central 14 et l'alésage de fixation 38 d'au moins une roue polaire 20, 22. Ce manchon intermédiaire comporte, de manière décrite ci-après, une portée cylindrique 60 coaxiale à l'arbre 14 et qui est reçu dans un alésage cylindrique complémentaire central 38, 138 de la roue polaire 20, 22 associée de manière à positionner la roue polaire coaxialement à l'arbre 14.

Le tronçon 57 est ici doté de reliefs en sorte qu'il est non lisse comme à la figure 1. Les reliefs consistent ici en un moletage à stries comme à la figure 1.

Selon un premier mode de réalisation de l'invention qui est représenté à la figure 2, le rotor 12 est similaire au rotor 12 représenté à la figure 1. Le rotor 12 comporte ainsi un arbre central 14, deux roues polaires 20, 22 qui sont agencées axialement de part et d'autre d'un noyau 36, et un bobinage d'excitation 34 qui s'étend radialement autour du noyau 36.

Cependant, le rotor 12 comporte ici un manchon intermédiaire 58 qui comporte un alésage central de fixation 59. Les tronçons d'entraînement 57 de l'arbre 14 sont emmanchés en force dans l'alésage de fixation 59 du manchon 58.

Ces tronçons 57 comportent des reliefs sous la forme de stries appartenant à un moletage.

Le manchon 58 comporte une portée 60 cylindrique, ici d'orientation axiale, qui se confond ici avec la surface cylindrique périphérique extérieure du manchon 58. La portée 60, qui est grâce à l'invention coaxiale de manière décrite ci-après à l'axe de rotation de l'arbre 14, est destinée à recevoir les roues polaires 20, 22.

Selon ce mode de réalisation de l'invention, le manchon 58 est aussi emmanché dans le noyau 36, de manière que le manchon 58 soit interposé radialement entre l'arbre 14 et le noyau 36 ici en deux tronçons, c'est-à-dire en deux moitiés, dont chacun est venu de matière avec sa roue polaire 20, 22 associée.

A cet effet, la section radiale de la portée cylindrique 60 a une forme complémentaire de la section radiale de l'alésage central 38 des roues polaires 20, 22. Plus particulièrement, la portée 60 a en section radiale une forme circulaire et est en contact intime avec la périphérie interne des roues polaire 22, 24 délimitant l'alésage central 38 d'orientation axiale, qui est donc coaxial à l'axe de l'arbre 14.

La portée cylindrique 60 du manchon 58 est emmanchée dans chaque alésage central 38 des roues polaires 20, 22, et par conséquent dans l'alésage central du noyau 36, ici en deux moitiés et qui est donc réalisé venu de matière avec les roues polaires 20, 22, de manière que le manchon 58 soit interposé radialement entre le tronçon d'entraînement 57 de l'arbre 14 et les roues polaires 20, 22. Ici, le manchon 58 est aussi interposé radialement entre le tronçon d'entraînement 57 et le noyau 36.

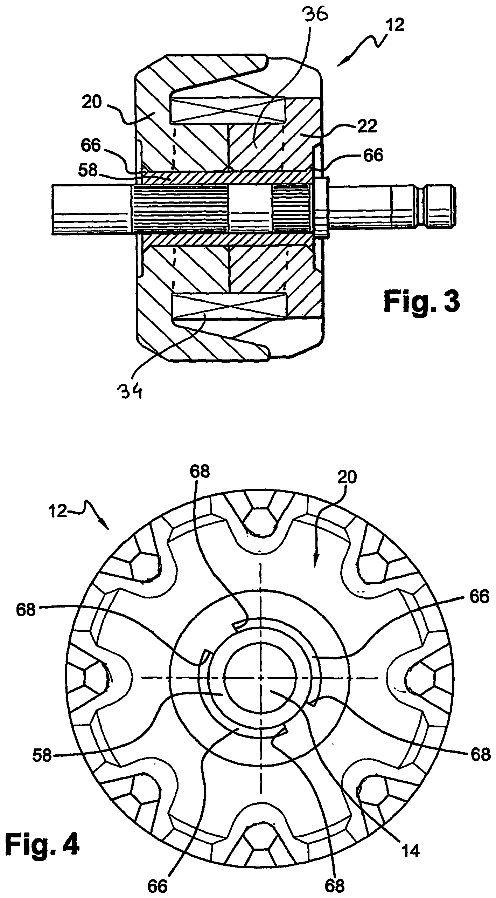

Plus précisément dans les figures 2 et 3, comme à la figure 1, il est prévu deux tronçons d'entraînement 57 de longueur axiale différente, à savoir un tronçon avant plus long qu'un tronçon arrière.

L'extrémité axiale avant du tronçon avant 57 s'étend en saillie axiale par rapport à l'extrémité axiale avant de la roue polaire avant 20 et du manchon 58. Ce tronçon avant s'étend à l'arrière par son extrémité arrière globalement jusqu'à la face radiale interne 62 de la moitié de noyau 36 issue de la roue polaire avant 20 et constituant l'extrémité axiale arrière de cette moitié de noyau et de la roue polaire avant.

L'extrémité axiale avant du tronçon d'entraînement arrière 57 s'étend axialement en retrait par rapport à la face radiale interne 64 de la moitié de noyau 36 issue de la roue polaire arrière 22 et constituant l'extrémité axiale avant de cette moitié de noyau et de la roue polaire arrière 22.

L'extrémité arrière de ce tronçon arrière 57 s'étend globalement jusqu'à un épaulement 114 appartenant, comme à la figure 1, à une collerette de l'arbre 14 voisine des bagues 42 et donc de l'extrémité arrière de l'arbre 14.

Bien entendu en variante le tronçon d'entraînement arrière est supprimé tout cela dépendant du couple à transmettre.

L'extrémité arrière du manchon 58 est en appui sur l'épaulement 114, plus précisément sur la face avant de la collerette 114. L'extrémité avant du manchon 58 est destinée à venir en appui sur l'entretoise annulaire 150 de la figure 1 interposée axialement entre l'extrémité avant du manchon 58 et le roulement 50.

Le manchon 58 est donc destiné à être monté à serrage axial entre l'épaulement 114 et l'entretoise 150 en sorte qu'il permet de diminuer les contraintes dans les roues polaires 20,22.

Dans cet exemple de réalisation on emmanche l'extrémité avant de l'arbre 14 dans le manchon 58 selon un procédé décrit ci-après. La collerette 114 limite le mouvement axial relatif de l'arbre par rapport au manchon 58 et a ici un diamètre externe inférieur à celui du manchon 58 de forme tubulaire dans les figures 2 et 3.

La longueur axiale du manchon 58 est au moins égale à la somme des longueurs axiales du noyau 36 et des alésages de fixation 38 de chaque roue polaire 20, 22. Ici, chaque extrémité axiale du manchon 58 s'étend dans le même plan radial que la face radiale externe du flasque 24 de la roue polaire 20, 22 associée.

On notera que l'entretoise 150, en variante, peut venir également en appui sur la périphérie interne du flasque 24 de la roue polaire avant 20.

Le manchon 58 est ici constitué d'une pièce unique. Cependant, le rotor 12 peut aussi comporter une pluralité de manchons 58 qui sont agencés bout à bout autour de l'arbre 14.

Avantageusement, le manchon 58 est réalisé dans une matière ferromagnétique, et de préférence dans la même matière que les roues polaires 20, 22 et le noyau 36.

Le rotor 12 comporte aussi des moyens de positionnement axial des roues polaires 20, 22 l'une par rapport à l'autre axialement le long de l'arbre 14.

Dans le premier mode de réalisation, le positionnement axial des roues polaires 20, 22 est réalisé par les faces radiales internes 62, 64 en vis-à-vis de chaque moitié de noyau 36. Ces faces 62, 64 délimitent respectivement l'extrémité axiale arrière de la roue polaire 20 et l'extrémité axiale avant de la roue polaire 22. En effet, lors du montage des roues polaires 20, 22 sur l'arbre 14, les faces radiales internes 62, 64 de chaque moitié de noyau 36 sont en butée l'une contre l'autre permettant ainsi le positionnement axial des roues polaires 20, 22.

On notera que chaque roue polaire 20, 22 comporte respectivement à son extrémité axiale arrière et à son extrémité axiale avant un chanfrein de montage pour faciliter son montage sur le manchon 58. Ces chanfreins sont avantageusement continus.

En variante les roues polaires sont dépourvues de chanfrein de montage.

En outre, le rotor 12 comporte des moyens pour solidariser en rotation les roues polaires 20, 22 avec le manchon intermédiaire 58 qui est lui-même solidaire en rotation avec ici les tronçons d'entraînement 57 de l'arbre 14.

Ici (figure 2 à 4) chaque roue polaire 20, 22 comporte également respectivement à son extrémité axiale avant et à son extrémité axiale arrière un chanfrein de solidarisation 66.

Comme représenté dans les figures 2 et 3, chaque roue polaire 20, 22 comporte donc deux chanfreins à savoir un chanfrein 66 de solidarisation et un chanfrein continu de montage

Ainsi, au moins un arc de l'arête circulaire externe de l'alésage central 38 de chaque roue polaire 20, 22 comporte un chanfrein 66 de solidarisation.

Comme représenté à la figure 4, le chanfrein 66 de solidarisation est apte à recevoir par sertissage une partie de matière déformée du manchon 58. A cet effet, le manchon 58 est avantageusement réalisé dans une matière ferromagnétique ductile tel que le fer doux qui est particulièrement adapté au sertissage. La dureté du manchon est inférieure à celle de l'arbre central 14 en matière ferromagnétique.

De plus, chaque chanfrein 66 est ici en deux parties annulaires, globalement semi circulaires, délimitées angulairement par deux faces radiales d'extrémité 68 qui permettent de bloquer en rotation autour de l'arbre 14 les roues polaires 20, 22 par rapport au manchon 58. Il est donc essentiel pour solidariser chaque roue polaire 20, 22 et le manchon 58 en rotation, que chaque partie annulaire de chanfrein 66 ne s'étende que sur un arc du pourtour de l'alésage central 38 de chaque roue polaire 20, 22 et non pas sur tout le pourtour de l'alésage 38.

Chaque partie annulaire de chanfrein 66 est remplie par la matière du manchon 58, qui flue, suite à l'opération de sertissage, dans les cavités constituées par le chanfrein 66.

En variante le chanfrein 66 comporte un nombre de parties plus grand que deux, par exemple 3 ou 4 parties.

Le sertissage permet aussi de bloquer axialement, c'est-à-dire en translation, les roues polaires 20, 22 par rapport au manchon 58.

Selon une variante non représentée, de l'invention, le chanfrein de solidarisation est remplacé ou complété par des encoches dans lesquelles la matière du manchon 58 flue. La longueur circonférentielle du chanfrein 66 dépend donc des applications, notamment de la présence ou non d'encoches implantées entre chaque partie de chanfrein.

Selon une variante non représentée de l'invention, on inverse les structures en sorte que le chanfrein 66 en au moins deux parties et/ou les encoches sont portés par une arête externe de chaque extrémité axiale de la portée 60 du manchon 58, et chaque roue polaire 20, 22 est serti dans le chanfrein 66 et/ou les encoches.

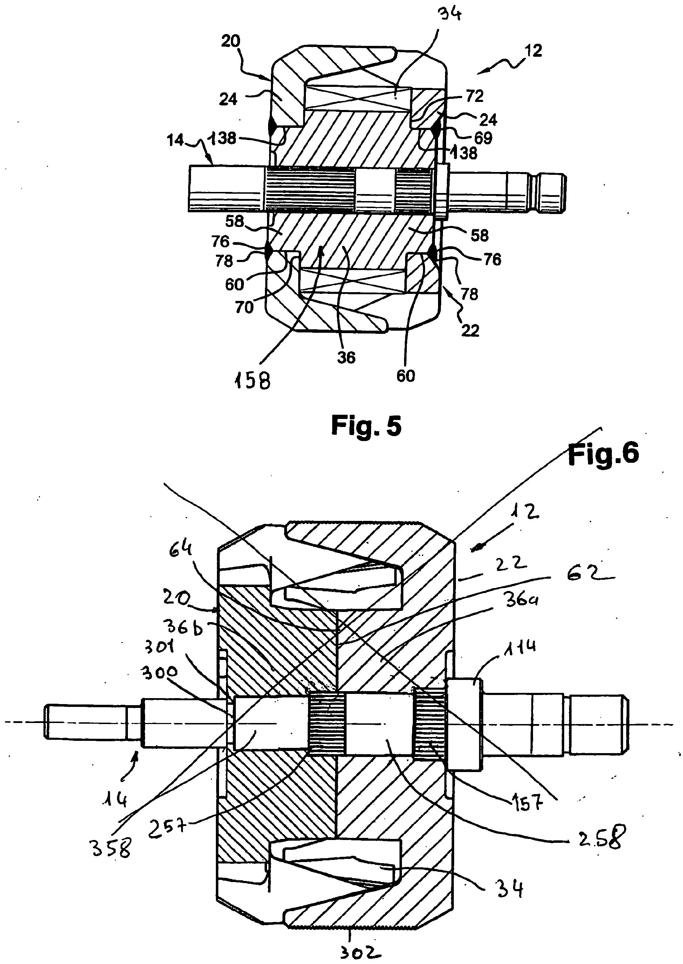

Dans les figures 2 à 4, grâce au manchon 58 on maîtrise de manière précise l'épaisseur du rotor c'est à dire la distance entre la face avant de la roue polaire avant 20 et la face arrière de la roue polaire arrière 22.
Selon encore une autre variante de l'invention représentée à la figure 5, chaque roue polaire 20, 22 est fixée à son manchon 58 intermédiaire par soudage. Ainsi, une soudure 69, de préférence continue, est réalisée entre le pourtour de l'arête externe de l'alésage central 38 de la roue polaire 20, 22 et le manchon 58 concerné. On peut par exemple réaliser un soudage du type TIG ou un soudage du type laser.

On notera que, par rapport au mode de réalisation des figures 2 et 3, le noyau 36 est dans ce cas intégré au manchon et constitue la partie centrale de celui-ci.

Plus précisément dans ce mode de réalisation il est prévu un moyeu 158 qui remplace le manchon 58 et le noyau 36 des figures 2 et 3. Ce moyeu 158 comporte un noyau central 36 qui s'étend donc en saillie radiale par rapport à un manchon intermédiaire avant 58 et à un manchon intermédiaire 58 arrière.

Le manchon avant 58 est dédié au montage de la roue polaire avant 20 et le manchon arrière 58 au montage de la roue polaire arrière 22.

Ces manchons intermédiaires 58 sont agencés axialement de part et d'autre du noyau 36.

Les roues polaires 20, 22 sont ainsi simplifiées et l'alésage central, référencé ici en 138, de chaque roue polaire est plus court axialement que l'alésage central 38 des figures 2 et 3 puisqu'il affecte uniquement le flasque 24 de chaque roue polaire.

En outre, pour un même diamètre extérieur du rotor, la hauteur des flasques 24 des roues polaires 20, 22 est réduite puisque dans ce mode de réalisation le diamètre extérieur des portées 60 est supérieur à celui des figures 2 et 3.

On appréciera que dans ce mode de réalisation on maîtrise encore de manière plus précise l'épaisseur du rotor.

On appréciera également que le bobinage d'excitation 34 est bien ménagé car la distance entre les roues polaires est précise, les roues polaires étant en appui contre les faces radiales d'extrémités 70, 72 saillantes du noyau 36.

En outre la périphérie externe du noyau 36 peut être de forme quelconque, par exemple de forme cylindrique, rectangulaire ou polygonale.

Bien entendu dans les figures 2 à 4 on peut fixer les roues polaires sur le manchon par soudage. De même à la figure 5 on peut fixer les roues polaires sur le manchon par sertissage.

L'invention propose aussi un procédé de réalisation d'un tel rotor 12.

Par la suite, les étapes décrites et les opérations qui les constituent sont numérotées pour des raisons de clarté de la description, cependant, ces étapes et ces opérations pourront être réalisées dans n'importe quel ordre à moins qu'il n'en soit mentionné autrement.

Selon les enseignements de l'invention, le procédé de réalisation du rotor 12 des figures 2 et 3 comporte une première étape E1 de montage du manchon intermédiaire 58 qui est préalable au montage de chaque roue polaire 20, 22.

L'étape E1 de montage du manchon 58 consiste à emmancher axialement à force le ou les tronçons d'entraînement 57 de l'arbre 14 dans l'alésage de fixation 59 du manchon 58 jusqu'à ce que la collerette 114 vienne en butée sur le manchon 58.

On emmanche ici par l'avant l'arbre 14 dans l'alésage 59 pour tailler des sillons dans celui-ci à l'aide des reliefs, ici en forme de stries, du ou des tronçon 57.

Cet emmanchement est réalisé avec des forces réduites par rapport à celles mise en oeuvre dans la figure 1 en sorte que l'on ménage l'extrémité arrière de l'arbre 14 de plus faible section pour le montage des bagues 42. Ces bagues, dans un exemple de réalisation appartiennent à un collecteur emmanché sur l'extrémité arrière de diamètre réduit de l'arbre 14. Un tel collecteur est décrit par exemple dans le document FR A 2 710 200 auquel on se reportera.

Le procédé de réalisation comporte aussi une deuxième étape E2 de réglage de la concentricité de chaque roue polaire 20, 22 par rapport à l'axe de rotation de l'arbre 14.

Une première opération E21 de l'étape E2 est mise en oeuvre après la première étape E1 de montage du manchon 58.

Lors de cette première opération E21, la portée 60 du manchon 58 est réalisée avant le montage de chaque roue polaire 20, 22. La portée 60 est usinée dans la face périphérique extérieure du manchon 58 de manière que la portée cylindrique 60 soit concentrique à l'axe de rotation de l'arbre 14.

Cette opération E21 permet de corriger les défauts de concentricité de la portée 60 du manchon 58 par rapport à l'axe de rotation de l'arbre 14, dues à la déformation plastique non homogène de l'alésage de fixation 59 du manchon 58 autour du ou des tronçons d'entraînement 57 à reliefs, ici moleté, de l'arbre 14.

On appréciera que le manchon 58 peut être standardisé en diamètre et donc qu'un assemblage arbre 14-manchon 58 peut servir au montage de roues polaires 20, 22 de différentes tailles en diamètre. La longueur du manchon 58 est facilement ajustée en fonction des applications, le manchon étant obtenu des les figures 2 et 3 à partir d'un tube.

La deuxième étape de réglage de la concentricité E2 comporte aussi une deuxième opération d'usinage E22 de l'alésage central 38, de chaque roue polaire 20, 22, et une troisième opération d'usinage E23 de la face cylindrique périphérique extérieure de chaque roue polaire 20, 22, c'est-à-dire ici de la surface extérieure des dents 30 pour définir un entrefer précis entre le rotor et le stator de la machine électrique tournante.

Ces deux dernières opérations E22, E23 permettent de régler la concentricité de la face périphérique extérieure 32 de chaque roue polaire 20, 22 par rapport à l'alésage central 38 avant le montage de la roue polaire 20, 22 sur l'arbre 14. Ces opérations d'usinage E22, E23 peuvent donc être réalisées sans risque de détériorer le bobinage 34. De plus, il est possible d'utiliser un lubrifiant lors de ces opérations d'usinage, ce qui rend l'usinage plus rapide et moins onéreux.

Puis une troisième étape E3 de réglage du positionnement axial de chaque roue polaire 20, 22 l'une par rapport à l'autre est réalisée. Cette troisième étape E3 ne comporte ici qu'une opération d'usinage E31 de la face radiale interne du demi-noyau 36 associé. Cette opération E31 permet de régler le positionnement axial des roues polaires 20, 22 l'une par rapport à l'autre.

Lors d'une quatrième étape E4, le bobinage 34 est positionné sur le noyau 36, puis une cinquième étape E5 de montage des roues polaires 20, 22 est réalisée.

Lors de cette cinquième étape E5, la portée 60 du manchon 58 est emmanchée dans l'alésage central 38 des roues polaires 20, 22 de manière que les faces radiales internes 62, 64 de chaque demi-noyau 36 soient en butées l'une contre l'autre. Les roues 20, 22 sont ainsi pressées l'une contre l'autre pour assurer le passage d'un flux magnétique entre elles à travers leurs faces radiales internes 62, 64.

Cette cinquième étape E5 est mise en oeuvre après les quatre premières étapes E1, E2, E3, E4.

Enfin, une sixième étape finale E6 de solidarisation est effectuée après l'étape E5 de montage de chaque roue polaire 20, 22. Au cours de cette étape E6, les roues polaires et le manchon 58 sont solidarisées en rotation autour de l'axe de l'arbre 14 et en translation, par exemple par soudage ou par sertissage.

Selon une première variante, représentée en pointillés à la figure 3, du premier mode de réalisation du rotor 12, le noyau forme une pièce unique 36 qui est distincte des roues polaires 20, 22.

Le manchon 58 est interposé radialement entre l'arbre 14 et chaque roue polaire 20, 22 d'une part, et entre l'arbre 14 et le noyau 36 d'autre part.

Le noyau 36 comporte deux faces radiales externes d'extrémité, délimitant les extrémités axiales de celui-ci, contre chacune desquelles la face interne du flasque 24 de chaque roue polaire 20, 22 est appuyée.

Dans cette variante, le positionnement axial d'une roue polaire 20, 22 par rapport à l'autre est réalisé par la face radiale interne de chaque flasque 24 qui est en butée axialement contre une face radiale externe en vis-à-vis du noyau 36.

Le procédé de réalisation est modifié en conséquence.

Ainsi, après mise en place de manière aisée du bobinage 34 sur le noyau 36, la cinquième étape E5 est décomposée en une étape E51 de montage du noyau 36 sur l'arbre 14 au cours de laquelle le manchon 58 est emmanché dans le noyau 36 et en une étape E52 de montage de chaque roue polaire 20, 22.

De préférence, l'étape de montage du noyau E51 est réalisée après la première étape E1 de montage du manchon 58 et avant la cinquième étape E52 de montage de chaque roue polaire 20, 22.

Par ailleurs, lors de la troisième étape E3 de réglage du positionnement axial, l'opération E31 d'usinage de la face interne 62, 64 du demi-noyau 36 est ici remplacée par une opération d'usinage de la face interne de chaque flasque 24.

De plus, afin de permettre un positionnement axial précis d'une roue par rapport à l'autre, la troisième étape de réglage du positionnement E3 comporte une deuxième opération d'usinage E32 de chaque face radiale externe d'extrémité du noyau 36.

Puis l'étape E52 de montage de chaque roue polaire 20, 22 est mise en oeuvre, après la mise en oeuvre des cinq premières étapes E1, E51, E2, E3, E4. Les roues polaires 20, 22 sont emmanchées axialement de part et d'autre du noyau 34 sur des portions d'extrémité de la face périphérique 60 du manchon 58 qui forment ainsi des portées cylindriques aptes à recevoir les roues polaires 20, 22.

Selon un deuxième mode de réalisation de l'invention qui est représenté à la figure 5, l'arbre 14 est emmanché directement dans le moyeu 158 et donc dans la partie centrale de celui-ci constituée par le noyau 36.

Le rotor 12 comporte ici, de manière précitée, deux manchons intermédiaires 58 qui sont agencés axialement de part et d'autre du noyau 36 et qui sont réalisés venus de matière avec le noyau 36, et dans lesquels le ou les tronçons d'entraînement 57 de l'arbre 14 est ou sont emmanchés.

Le diamètre extérieur du noyau 36 est supérieur au diamètre extérieur de la portée 60 de chaque manchon 58. Ainsi, le noyau 36 comporte deux faces radiales externes d'extrémité 70, 72 qui font saillies radialement par rapport aux manchons 58 et qui délimitent les extrémités axiales du noyau 36.

La portée 60 de chaque manchon 58 est emmanchée dans l'alésage central 138 de la roue polaire 20, 22 associée de manière que la face radiale interne 74 du flasque 24 de la roue polaire 20, 22, délimitant respectivement l'extrémité axiale arrière et l'extrémité axiale avant de la roue polaire 20, 22, soit en butée contre la face radiale externe 70, 72 en saillie en vis-à-vis du noyau 36. Les roues polaires 20, 22 sont ainsi positionnées axialement l'une par rapport à l'autre.

En d'autres termes, les portées 60 sont usinées de manière simple dans chaque face cylindrique externe des portions d'extrémité axiale du moyeu 158 comprenant le noyau 36.

Dans le mode de réalisation représenté à la figure 5, chaque roue polaire 20, 22 est fixée sur son manchon intermédiaire 58 associé par soudage 69. A cet effet, deux chanfreins 76, 78 sont réalisés de manière coïncidente respectivement dans la face radiale externe du flasque 24 de la roue polaire 20, 22 et dans la face radiale externe du manchon 58 associé.

Selon une variante représentée à la figure 4, la solidarisation entre chaque roue polaire 20, 22 et son manchon 58 est effectuée par sertissage.

Le procédé de réalisation précédemment décrit est modifié pour être adapté à ce deuxième mode de réalisation de l'invention

Ainsi, la cinquième étape E5 est décomposée en une étape E51 de montage du noyau 36 sur l'arbre 14 au cours de laquelle le manchon 58 est emmanché dans le noyau 36 et en une étape E52 de montage de chaque roue polaire 20, 22.

Cependant, l'étape E51 de montage du noyau est réalisée de manière concomitante à la première étape E1 de montage du manchon car les manchons 58 et le noyau 36 forment une pièce unique en forme de moyeu 158.

L'étape de montage du noyau E51 est donc réalisée avant la cinquième étape E52 de montage de chaque roue polaire 20, 22.

Par ailleurs, lors de la troisième étape E3 de réglage du positionnement axial, l'opération E31 d'usinage de la face interne 62, 64 du demi-noyau 36 est ici remplacée par une opération d'usinage de la face interne de chaque flasque 24.

De plus, afin de permettre un positionnement axial précis d'une roue par rapport à l'autre, la troisième étape de réglage du positionnement E3 comporte une deuxième opération d'usinage E32 de chaque face radiale externe d'extrémité du noyau 36.

Avantageusement la deuxième opération d'usinage E32 du noyau 36 est réalisée après l'étape E51 de montage du noyau 36. En effet, lors de l'emmanchement à force du manchon 58 sur le noyau 36, chaque face d'extrémité du noyau 36 est susceptible d'être déformée. Aussi, afin de garantir un positionnement axial précis des roues polaires 20, 22 et afin de permettre un contact optimal entre chaque roue polaire 20, 22 et le noyau 36, il est préférable de réaliser l'usinage du noyau 36 après son montage sur le manchon 58.

Puis l'étape E52 de montage de chaque roue polaire 20, 22 est mise en oeuvre, après la mise en oeuvre des cinq premières étapes E1, E51, E2, E3, E4. Les roues polaires 20, 22 sont emmanchées axialement de part et d'autre du noyau 34 sur des portions d'extrémité de la face périphérique 60 du manchon 58 qui forment ainsi des portées cylindriques aptes à recevoir les roues polaires 20, 22.

Selon une variante non représentée du rotor 12, le noyau 36 et les deux manchons 58 sont des éléments distincts. L'arbre 14 est donc emmanché directement dans le noyau 36, et les tronçons d'entraînement 57 de l'arbre 14 sont emmanchés à force dans les manchons 58, qui sont répartis axialement de part et d'autre du noyau 36.

L'arbre 14 comporte dans un mode de réalisation un tronçon lisse entre ses deux tronçons d'entraînement 57 associés aux manchons 56. Ce tronçon lisse sert de centreur au noyau 36, la périphérie externe du tronçon lisse de l'arbre étant en contact intime avec la périphérie interne du noyau 36 délimitée par l'alésage interne du noyau 36.

On notera que les tronçons d'entraînement 57 sont plus courts axialement que dans les modes de réalisation des figures 2, 3 et 5 en sorte que les manchons 58 sont moins déformés que dans ces figures.

Le procédé de réalisation de cette variante est similaire au procédé de réalisation de la deuxième variante du premier mode de réalisation. Cependant, l'étape E5ter de montage du noyau 36 précède ici la première étape E1 de montage du manchon 58 car le noyau 36 est monté directement sur l'arbre 14, et non sur le manchon 58 comme c'est le cas dans le premier mode de réalisation.

Pour les besoins de la description, le rotor 12 a été décrit ici agencé dans un alternateur. Cependant, le rotor 12 n'est pas limité à cette application.

Dans un rotor réalisé selon l'état de la technique, la force qui est nécessaire pour monter les roues polaires directement sur le tronçon d'entraînement de l'arbre est très élevée. En conséquence, la distance axiale entre les deux roues polaires est mal maîtrisée et il faut prévoir un intervalle de tolérance large.

Grâce aux enseignements de l'invention, la force suffisante pour monter les roues polaires 20, 22 sur leur manchon intermédiaire associé 58 est suffisamment diminuée pour diminuer sensiblement cet intervalle de tolérance.

Dans un rotor selon l'état de la technique, il est ainsi nécessaire de prévoir un jeu important entre chaque extrémité axiale du bobinage et le flasque de chaque roue polaire. Le rotor 12 réalisé selon les enseignements de l'invention permet d'obtenir un positionnement axial plus précis des roues polaires 20, 22 l'une par rapport à l'autre. Il est donc possible d'implanter un bobinage 34 plus long entre les deux roues polaires 20, 22 ce qui permet d'augmenter la puissance de l'alternateur.

Avantageusement, la précision de la distance axiale entre les deux roues polaires 20, 22 d'un rotor 12 selon l'invention est améliorée par rapport à celle d'un rotor selon l'état de la technique. Il est ainsi possible de prévoir un bobinage 34 qui occupe au mieux l'espace entre la périphérie externe du noyau 36 et les griffes des roues polaires, notamment dans le cadre du mode de réalisation de la figure 5.

On peut également mieux ajuster la longueur axiale du corps du stator par rapport à la longueur axiale entre les deux roues polaire.

De même, la distance axiale entre les deux roues polaires 20, 22 étant mieux maîtrisée, un rotor 12 selon les enseignements de l'invention permet d'agencer aux deux extrémités du rotor 12 des ventilateurs plus puissant sans augmenter l'encombrement axial de l'alternateur. Ainsi le ventilateur arrière 56 de la figure 1 est en variante un dispositif de ventilation comportant deux ventilateurs superposés comme décrit par exemple dans le document WO 2004/106748 auquel on se reportera. Ce dispositif de ventilation à deux ventilateurs superposés permet de bien refroidir les chignons du bobinage du stator 18, notamment lorsque ce bobinage 18 comporte de manière précitée deux enroulements triphasés en triangle décalés de 30° et reliés chacun à un pont redresseur. Cette disposition associée avec un montage d'aimants permanents entre les dents 30, dont le nombre de paires peut être inférieur ou égal au nombre de paires de pôles du rotor, permet de bien ajuster la courbe caractéristique de l'alternateur (intensité en fonction du nombre de tours par minute de l'alternateur) selon les applications.

Un autre avantage est qu'il est aussi possible de diminuer l'encombrement axial de l'alternateur.

On peut mieux contrôler le rapport entre le diamètre externe du noyau et le diamètre externe du rotor.

D'une manière générale on maîtrise mieux la puissance de l'alternateur et on diminue les pertes de celle-ci.

Grâce à l'invention on peut ne pas modifier l'arbre 14 du rotor 12 et donc utiliser un arbre 14 du type standard.

De même le noyau 36 n'est pas modifié de manière profonde.

Bien entendu toutes les combinaisons sont possibles.

La présence de la collerette 114 n'est pas obligatoire, le déplacement de l'arbre pouvant être programmé à l'aide d'un dispositif.

Les tronçons d'entraînement 57, 157 peuvent avoir une autre forme et comporter par exemple une pluralité de saillies.

## Revendications

1. Rotor (12) de machine électrique tournante, telle qu'un alternateur ou alterno-démarreur, notamment pour véhicule automobile, qui comporte :
- un arbre central (14) ;
- un noyau (36) annulaire coaxial à l'arbre (14) ;
- un bobinage (34) qui s'étend radialement autour du noyau (36) ;
- et deux roues polaires (20, 22) à griffes qui sont agencées axialement de part et d'autre du noyau (36) et du bobinage (34) ;
du type dans lequel l'arbre (14) comporte au moins un tronçon d'entraînement (57) dont la section, suivant un plan radial, est non lisse, et qui est emmanché axialement à force dans un alésage de fixation (59) d'au moins un composant (58) du rotor (12) de manière à solidariser en rotation au moins les deux roues polaires (20, 22) du rotor (12) à l'arbre (14),
**caractérisé en ce qu'**il comporte un manchon intermédiaire (58) réalisé en matériau ferromagnétique et qui est interposé radialement entre chaque roue polaire (20, 22) et l'arbre central (14), et sur lequel est montée ladite roue polaire (20, 22), **en ce que** ledit tronçon (57) de l'arbre (14) est emmanché axialement dans un alésage de fixation (59) réalisé dans le manchon intermédiaire (58), et **en ce qu'**il comporte des moyens pour solidariser les roues polaires (20, 22) avec le manchon intermédiaire (58) en rotation autour de l'axe de l'arbre central (14).

2. Rotor (12) selon la revendication précédente, **caractérisé en ce que** le manchon intermédiaire (58) comporte une portée cylindrique (60) coaxiale à l'arbre central (14) qui est associée à chaque roue polaire (20, 22), et qui est reçue dans un alésage (38, 138) cylindrique complémentaire central de la roue polaire (20, 22) associée, de manière à positionner la roue polaire (20, 22) associée coaxialement à l'arbre (14).

3. Rotor (12) selon la revendication précédente, **caractérisé en ce que** le manchon intermédiaire (58) est interposé radialement entre le noyau (36) et l'arbre (14).

4. Rotor (12) selon la revendication précédente, **caractérisé en ce que** le noyau (36) est au moins en partie formé venu de matière avec l'une des roues polaires (20, 22).

5. Rotor (12) selon la revendication précédente, **caractérisé en ce que** le noyau (36) est réalisé en au moins deux tronçons distincts axialement et **en ce que** chaque tronçon du noyau (36) est formé venu de matière avec la roue polaire (20, 22) adjacente.

6. Rotor (12) selon la revendication 3, **caractérisé en ce que** le noyau (36) et les roues polaires (20, 22) sont des éléments distincts.

7. Rotor (12) selon l'une quelconque des revendications précédentes, **caractérisé en ce qu'**il comporte un manchon unique (58).

8. Rotor (12) selon l'une quelconque des revendications 1 à 5, **caractérisé en ce qu'**il comporte une pluralité de manchons (58).

9. Rotor (12) selon l'une quelconque des revendications précédentes, **caractérisé en ce qu'**il comporte des moyens (62, 64, 70, 72, 74) de positionnement axial des roues polaires (20, 22) l'une par rapport à l'autre le long de l'arbre (14).

10. Rotor (12) selon la revendication précédente, **caractérisé en ce que** chaque roue polaire (20, 22) comporte une face radiale interne (74) qui est en butée axialement contre une face radiale externe (70, 72) en vis-à-vis du noyau (36).

11. Rotor (12) selon la revendication 9 prise en combinaison avec la revendication 5, **caractérisé en ce que** chaque tronçon de noyau comporte une face radiale interne (62, 64) qui sont axialement en butée l'une contre l'autre.

12. Rotor (12) selon l'une quelconque des revendications précédentes, **caractérisé en ce que** la roue polaire (20, 22) et le manchon intermédiaire (58) sont solidarisés par soudage.

13. Rotor (12) selon l'une quelconque des revendications 1 à 11, **caractérisé en ce que** la roue polaire (20, 22) et le manchon (58) sont solidarisés par sertissage.

14. Rotor (12) selon la revendication précédente, **caractérisé en ce que** la roue polaire (20, 22) ou le manchon (58) comporte un chanfrein (66) en arc de cercle pour le sertissage de l'autre pièce.

15. Procédé de réalisation d'un rotor (12) selon l'une quelconque des revendications précédentes, du type qui comporte :
- une étape (E51) de montage du noyau (36) ;
- une étape (E4) de montage du bobinage (34) ;
- une étape (E5, E52) de montage de chaque roue polaire (20, 22) ;
- une étape (E2) de réglage de la concentricité de chaque roue polaire (20, 22) par rapport à l'arbre (14) ;
- une étape (E3) de réglage du positionnement axial des roues polaires (20, 22) l'une par rapport à l'autre ;
**caractérisé en ce qu'**il comporte une étape (E1) de montage du manchon intermédiaire (58) qui est préalable à l'étape (E5, E51) de montage de la ou des roues (20, 22) associées au manchon intermédiaire (58), et qui consiste à emmancher axialement à force le tronçon d'entraînement (57) dans l'alésage (59) du manchon intermédiaire (58).

16. Procédé selon la revendication précédente, **caractérisé en ce que** l'étape de réglage de la concentricité (E2) comporte une première opération (E21) d'usinage du manchon (58), pour former la ou les portées cylindriques (60) aptes à recevoir chaque roue polaire (20, 22).

17. Procédé selon la revendication précédente, **caractérisé en ce que** l'opération d'usinage du manchon (E21) est réalisée postérieurement à l'étape de montage du manchon (E1).

18. Procédé selon la revendication précédente, **caractérisé en ce que** l'étape de montage de chaque roue polaire (E5) consiste à emmancher la portée cylindrique (60) associée du manchon (58) dans l'alésage (38) de chaque roue (20, 22).

19. Procédé selon la revendication précédente, **caractérisé en ce que** l'étape (E2) de réglage de la concentricité de chaque roue polaire (20, 22) comporte une deuxième opération d'usinage (E22) de l'alésage (38) de chaque roue polaire (20, 22).

20. Procédé selon la revendication précédente, **caractérisé en ce que** l'étape de réglage de la concentricité (E2) comporte une troisième opération d'usinage (E23) de la face cylindrique périphérique extérieure de la roue polaire (20, 22).

21. Procédé selon la revendication précédente, **caractérisé en ce que** l'étape de réglage du positionnement axial de chaque roue polaire (E3) comporte une première opération d'usinage (E31) de la face radiale interne (62, 64, 74) de la roue (20, 22).

22. Procédé selon la revendication précédente, **caractérisé en ce que** l'étape du montage du noyau (E51) est réalisée simultanément à l'étape de montage des roues (E5, E52).

23. Procédé selon l'une quelconque des revendications 15 à 22, **caractérisé en ce qu'**il comporte une étape finale de solidarisation (E6) de chaque roue (20, 22) avec le manchon (58) associé, en rotation avec l'arbre (14).

## Patentansprüche

1. Rotor (12) einer drehenden elektrischen Maschine, wie ein Wechselstromgenerator oder ein Starter-Generator, insbesondere für ein Kraftfahrzeug, der aufweist:
- eine zentrale Welle (14);
- einen ringförmigen Kern (36) koaxial zur Welle (14);
- eine Wicklung (34), die sich radial um den Kern (36) erstreckt;
- und zwei Polräder (20, 22) mit Klauen, die axial zu beiden Seiten des Kerns (36) und der Wicklung (34) angeordnet sind;
von der Art, bei der die Welle (14) mindestens einen Antriebsabschnitt (57) aufweist, dessen Querschnitt gemäß einer radialen Ebene nicht glatt ist, und der axial in eine Befestigungsbohrung (59) mindestens eines Bestandteils (58) des Rotors (12) presseingeschoben ist, um mindestens die zwei Polräder (20, 22) des Rotors (12) in Drehung fest mit der Welle (14) zu verbinden,
**dadurch gekennzeichnet, dass** er eine Zwischenmuffe (58) aufweist, die aus ferromagnetischem Material hergestellt und radial zwischen jedes Polrad (20, 22) und die zentrale Welle (14) eingefügt ist und auf die das Polrad (20, 22) montiert ist, dass der Abschnitt (57) der Welle (14) axial in eine Befestigungsbohrung (59) eingeschoben ist, die in der Zwischenmuffe (58) hergestellt ist, und dass er Einrichtungen aufweist, um die Polräder (20, 22) in Drehung um die Achse der zentralen Welle (14) fest mit der Zwischenmuffe (58) zu verbinden.

2. Rotor (12) nach dem vorhergehenden Anspruch, **dadurch gekennzeichnet, dass** die Zwischenmuffe (58) eine zylindrische Auflagefläche (60) koaxial zur zentralen Welle (14) aufweist, die jedem Polrad (20, 22) zugeordnet ist, und die in einer komplementären zentralen zylindrischen Bohrung (38, 138) des zugeordneten Polrads (20, 22) aufgenommen wird, um das zugeordnete Polrad (20, 22) koaxial zur Welle (14) zu positionieren.

3. Rotor (12) nach dem vorhergehenden Anspruch, **dadurch gekennzeichnet, dass** die Zwischenmuffe (58) radial zwischen den Kern (36) und die Welle (14) eingefügt ist.

4. Rotor (12) nach dem vorhergehenden Anspruch, **dadurch gekennzeichnet, dass** der Kern (36) zumindest zum Teil aus einem Stück mit einem der Polräder (20, 22) geformt ist.

5. Rotor (12) nach dem vorhergehenden Anspruch, **dadurch gekennzeichnet, dass** der Kern (36) aus mindestens zwei axial unterschiedlichen Abschnitten hergestellt ist, und dass jeder Abschnitt des Kerns (36) aus einem Stück mit dem benachbarten Polrad (20, 22) geformt ist.

6. Rotor (12) nach Anspruch 3, **dadurch gekennzeichnet, dass** der Kern (36) und die Polräder (20, 22) unterschiedliche Elemente sind.

7. Rotor (12) nach einem der vorhergehenden Ansprüche, **dadurch gekennzeichnet, dass** er eine einzige Muffe (58) aufweist.

8. Rotor (12) nach einem der Ansprüche 1 bis 5, **dadurch gekennzeichnet, dass** er eine Vielzahl von Muffen (58) aufweist.

9. Rotor (12) nach einem der vorhergehenden Ansprüche, **dadurch gekennzeichnet, dass** er Einrichtungen (62, 64, 70, 72, 74) zur axialen Positionierung der Polräder (20, 22) zueinander entlang der Welle (14) aufweist.

10. Rotor (12) nach dem vorhergehenden Anspruch, **dadurch gekennzeichnet, dass** jedes Polrad (20, 22) eine radiale Innenseite (74) aufweist, die axial in Anschlag gegen eine gegenüberliegende radiale Außenseite (70, 72) des Kerns (36) ist.

11. Rotor (12) nach Anspruch 9 in Kombination mit Anspruch 5, **dadurch gekennzeichnet, dass** jeder Kernabschnitt eine radiale Innenseite (62, 64) aufweist, die axial gegeneinander in Anschlag sind.

12. Rotor (12) nach einem der vorhergehenden Ansprüche, **dadurch gekennzeichnet, dass** das Polrad (20, 22) und die Zwischenmuffe (58) durch Schweißen fest miteinander verbunden werden.

13. Rotor (12) nach einem der Ansprüche 1 bis 11, **dadurch gekennzeichnet, dass** das Polrad (20, 22) und die Muffe (58) durch Einpressen fest miteinander verbunden werden.

14. Rotor (12) nach dem vorhergehenden Anspruch, **dadurch gekennzeichnet, dass** das Polrad (20, 22) oder die Muffe (58) eine kreisbogenförmige Abschrägung (66) für das Einpressen des anderen Bauteils aufweist.

15. Verfahren zur Herstellung eines Rotors (12) nach einem der vorhergehenden Ansprüche, von der Art, die aufweist:
- einen Schritt (E51) der Montage des Kerns (36);
- einen Schritt (E4) der Montage der Wicklung (34);
- einen Schritt (E5, E52) der Montage jedes Polrads (20, 22);
- einen Schritt (E2) der Einstellung der Konzentrizität jedes Polrads (20, 22) bezüglich der Welle (14);
- einen Schritt (E3) der Einstellung der axialen Positionierung der Polräder (20, 22) zueinander;
**dadurch gekennzeichnet, dass** es einen Schritt (E1) der Montage der Zwischenmuffe (58) aufweist, der vor dem Schritt (E5, E51) der Montage des oder der Räder (20, 22) liegt, die der Zwischenmuffe (58) zugeordnet sind, und der darin liegt, den Antriebsabschnitt (57) axial in die Bohrung (59) der Zwischenmuffe (58) presseinzusetzen.

16. Verfahren nach dem vorhergehenden Anspruch, **dadurch gekennzeichnet, dass** der Schritt der Einstellung der Konzentrizität (E2) einen ersten Vorgang (E21) der maschinellen Bearbeitung der Muffe (58) aufweist, um die zylindrische(n) Auflagefläche(n) (60) zu formen, die jedes Polrad (20, 22) aufnehmen können.

17. Verfahren nach dem vorhergehenden Anspruch, **dadurch gekennzeichnet, dass** der Schritt der maschinellen Bearbeitung der Muffe (E21) nach dem Schritt der Montage der Muffe (E1) erfolgt.

18. Verfahren nach dem vorhergehenden Anspruch, **dadurch gekennzeichnet, dass** der Schritt der Montage jedes Polrads (E5) darin besteht, die zugeordnete zylindrische Auflagefläche (60) der Muffe (58) in die Bohrung (38) jedes Rads (20, 22) einzusetzen.

19. Verfahren nach dem vorhergehenden Anspruch, **dadurch gekennzeichnet, dass** der Schritt (E2) der Einstellung der Konzentrizität jedes Polrads (20, 22) einen zweiten Vorgang der maschinellen Bearbeitung (E22) der Bohrung (38) jedes Polrads (20, 22) aufweist.

20. Verfahren nach dem vorhergehenden Anspruch, **dadurch gekennzeichnet, dass** der Schritt der Einstellung der Konzentrizität (E2) einen dritten Vorgang der maschinellen Bearbeitung (E23) der äußeren zylindrischen Umfangsseite des Polrads (20, 22) aufweist.

21. Verfahren nach dem vorhergehenden Anspruch, **dadurch gekennzeichnet, dass** der Schritt der Einstellung der axialen Positionierung jedes Polrads (E3) einen ersten Vorgang der maschinellen Bearbeitung (E31) der radialen Innenseite (62, 64, 74) des Rads (20, 22) aufweist.

22. Verfahren nach dem vorhergehenden Anspruch, **dadurch gekennzeichnet, dass** der Schritt der Montage des Kerns (E51) gleichzeitig mit dem Schritt der Montage der Räder (E5, E52) durchgeführt wird.

23. Verfahren nach einem der Ansprüche 15 bis 22, **dadurch gekennzeichnet, dass** es einen letzten Schritt der festen Verbindung (E6) jedes Rads (20, 22) mit der zugeordneten Muffe (58) in Drehung mit der Welle (14) aufweist.

## Claims

1. Rotor (12) for a rotary electrical machine, such as an alternator or alternator-starter, notably for a motor vehicle, and which comprises:
• A central shaft (14);
• An annular core (36) coaxial with the shaft (14);
• A coil (34) extending radially around the core (36) ;
• And two claw-type polar wheels (20, 22) which are arranged axially one on each side of the core (36) and of the coil (34);
of the type in which the shaft (14) comprises at least one drive portion (57) of which the cross-section, in a radial plane, is non-smooth, and which is axially force-fitted into a fixing bore (59) of at least one component (58) of the rotor (12) so as to secure in terms of rotation at least the two polar wheels (20, 22) of the rotor (12) to the shaft (14), **characterized in that** it comprises an intermediate sleeve (58) made of ferromagnetic material and which is interposed radially between each polar wheel (20, 22) and the central shaft (14), and on which the said polar wheel (20, 22) is mounted, **in that** said portion (57) of the shaft (14) is fitted axially into a fixing bore (59) formed in the intermediate sleeve (58),
and **in that** it comprises means for securing the polar wheels (20, 22) to the intermediate sleeve (58) in terms of rotation about the axis of the central shaft (14).

2. Rotor (12) according to the preceding claim, **characterized in that** the intermediate sleeve (58) comprises a cylindrical bearing surface (60) coaxial with the central shaft (14) which is associated with each polar wheel (20, 22), and which is housed in a complimentary central cylindrical bore (38, 138) of the associated polar wheel (20, 22) so as to position the associated polar wheel (20, 22) coaxial with the shaft (14).

3. Rotor (12) according to the preceding claim, **characterized in that** the intermediate sleeve (58) is located radially between the core (36) and the shaft (14).

4. Rotor (12) according to the preceding claim, **characterized in that** the core (36) is at least partially formed as an integral part of one of the polar wheels (20, 22).

5. Rotor (12) according to the preceding claim, **characterized in that** the core (36) is made in at least two axially distinct sections and **in that** each section of the core (36) is formed as an integral part of the adjacent polar wheel (20, 22).

6. Rotor (12) according to Claim 3, **characterized in that** the core (36) and the polar wheels (20, 22) are distinct elements.

7. Rotor (12) according to any one of the preceding claims, **characterized in that** it comprises a single sleeve (58).

8. Rotor (12) according to any one of Claims 1 to 5, **characterized in that** it comprises a plurality of sleeves (58).

9. Rotor (12) according to any one of the preceding claims, **characterized in that** it comprises means (62, 64, 70, 72, 74) for axially positioning the polar wheels (20, 22) relative to one another along the shaft (14).

10. Rotor (12) according to the preceding claim, **characterized in that** each polar wheel (20, 22) comprises an internal radial face (74) which is axially in abutment against a facing external radial face (70, 72) of the core (36).

11. Rotor (12) according to Claim 9 considered in combination with Claim 5, **characterized in that** each section of core comprises an internal radial face (62, 64) which faces are axially in abutment with one another.

12. Rotor (12) according to any one of the preceding claims, **characterized in that** the polar wheel (20, 22) and the intermediate sleeve (58) are joined together by welding.

13. Rotor (12) according to any one of Claims 1 to 11, **characterized in that** the wheel (20, 22) and the sleeve (58) are joined together by crimping.

14. Rotor (12) according to the preceding claim, **characterized in that** the polar wheel (20, 22) or the sleeve (58) comprises a circular chamfer (66) for the crimping of the other component.

15. Method for producing a rotor (12) according to any one of the preceding claims, which comprises:
• A step (E51) of mounting the core (36);
• A step (E4) of mounting the coil (34);
• A step (E5, E52) of mounting each polar wheel (20, 22);
• A step (E2) of adjusting the concentricity of each polar wheel (20, 22) with respect to the shaft (14);
• A step (E3) of adjusting the axial positioning of the polar wheels (20, 22) relative to one another;
**characterized in that** it comprises a step (E1) mounting the intermediate sleeve (58) which takes place prior to the step (E5, E51) of mounting the wheel or wheels (20, 22) associated with the intermediate sleeve (58) and which consists in axially force-fitting the driving section (57) into the bore (59) of the intermediate sleeve (58).

16. Method according to the preceding claim, **characterized in that** the step (E2) of adjusting the concentricity involves a first operation (E21) machining the sleeve (58) to form the cylindrical bearing surface or surfaces (60) able to accept each polar wheel (20, 22).

17. Method according to the preceding claim, **characterized in that** the operation of machining the sleeve (E21) is performed after the step of mounting the sleeve (E1).

18. Method according to the preceding claim, **characterized in that** the step of mounting each polar wheel (E5) consists in pushing the associated cylindrical bearing surface (60) of the sleeve (58) into the bore (38) of each wheel (20, 22).

19. Method according to the preceding claim, **characterized in that** the step (E2) of adjusting the concentricity of each polar wheel (20, 22) involves a second operation (E22) of machining the bore (38) of each polar wheel (20, 22).

20. Method according to the preceding claim, **characterized in that** the step of adjusting the concentricity (E2) involves a third operation (E23) of machining the exterior peripheral cylindrical face of the polar wheel (20, 22).

21. Method according to the preceding claim, **characterized in that** the step of adjusting the axial positioning of each polar wheel (E3) involves a first operation (E31) of machining the internal radial face (62, 64, 74) of the wheel (20, 22).

22. Method according to the preceding claim, **characterized in that** the step of mounting the core (E51) is performed simultaneously with the step of mounting the wheels (E5, E52).

23. Method according to any one of Claims 15 to 22, **characterized in that** it involves a final step (E6) of securing each wheel (20, 22) to the associated sleeve (58) in terms of rotation with the shaft (14).
